# EUROPEAN PATENT SPECIFICATION

(11) **EP 4 367 000 B1**
(45) Date of publication and mention of the grant of the patent: **03.12.2025**
(21) Application number: 22741259.0
(22) Date of filing: 07.07.2022
(51) Int. Cl.: B62B 7/12, B62B 7/14

(54) **SEAT-BED DUAL-PURPOSE SUPPORT SWITCHING MECHANISM FOR BEARING DEVICE, SEAT, AND BEARING DEVICE**
DOPPELZWECK-STÜTZSCHALTMECHANISMUS FÜR EINE SITZBETTVORRICHTUNG, SITZ UND LAGERVORRICHTUNG
MÉCANISME DE COMMUTATION DE SUPPORT À DOUBLE USAGE DE LIT-SIÈGE POUR DISPOSITIF DE SUPPORT, SIÈGE ET DISPOSITIF DE SUPPORT

(30) Priority: 07.07.2021 CN 202110770235
(43) Date of publication of application: 15.05.2024
(73) Proprietor: Wonderland Switzerland AG, 6312 Steinhausen (CH)
(72) Inventor: YI, Xiaolong, 6312 Steinhausen (CH)
(74) Representative: Pfenning, Meinig & Partner mbB
(86) International application number: PCT/EP2022/068866
(87) International publication number: WO 2023/280971

(56) References cited:
- EP-A2- 2 832 625
- EP-A2- 2 937 262
- GB-A- 2 590 106
- US-A1- 2020 239 057

## Description

### TECHNICAL FIELD

The present invention relates to a seat-bed dual-purpose support switching mechanism for a bearing device, and in particular, to a seat-bed dual-purpose support switching mechanism in which a bearing support may switch between a seat mode and a carrycot mode, a seat, and a bearing device.

### BACKGROUND

It is known that a stroller for infants mainly has a frame and a carrier arranged on the frame. An adult can place an infant in the carrier and push the frame to move around conveniently. The carrier may be a carrycot for the infant to lie down, or a seat for the infant to sit.

To enable the infants and children to feel more comfortable in the strollers, many strollers have seats designed with backrests fully laid down so that the infants may lie flat in the seats. However, existing structures for making the backrest lie flat are more complicated to realize and rather inconvenient to operate. In addition, in the process of laying the backrest of the existing seats down, the strollers are easily overturned to damage the safety of the infant therein due to a change in the center of gravity.

Each of the following publications of patent applications discloses a seat-bed dual-purpose stroller or a related product to be discussed in the present disclosure: US2020/0239057A1, GB2590106A, EP2937262A2 and EP2832625A2.

### SUMMARY

In view of the above existing technologies, a seat-bed dual-purpose support switching mechanism for a bearing device, a seat, and a bearing device are developed, so that the bearing device is provided with a switching mechanism for switching between a seat mode and a carrycot mode, which may achieve the effects of a simple structure and labor-saving operations.

In order to achieve the above objectives, the present invention provides a seat-bed dual-purpose support switching mechanism for a bearing device, the bearing device includes a main frame body, wherein the support switching mechanism includes two fixing holders, a bearing support, and a switching assembly, and the switching assembly includes a locking member and a driving lever.

The two fixing holders are respectively fixed to opposite sides of the main frame body, at least one of the fixing holders has a seat mode positioning portion and a carrycot mode positioning portion being separated by an angle on the fixing holder.

The bearing support is provided, on opposite sides, with rotary holders corresponding to each of the fixing holders, each of the rotary holders is rotatably arranged on its corresponding fixing holder, and the bearing support is configured to pivotably swing between a seat position and a carrycot position as the rotary holders rotate.

The locking member is connected to the driving lever to be disposed on at least one of the rotary holder, wherein, when the driving lever is pulled by an external force, the locking member is driven to move away from its corresponding fixing holder, so that the bearing support is unlocked and allowed to pivotably swing between the seat position and the carrycot position; and after the external force disappears, the locking member is driven to move towards its corresponding fixing holder to engage with one of the seat mode positioning portion and the carrycot mode positioning portion, so that the bearing support is locked.

In a preferred embodiment, the locking member includes an actuation portion and an engagement portion extending laterally from one end of the actuation portion, each of the seat mode positioning portion and the carrycot mode positioning portion is a positioning groove, and the locking member is engaged and locked when the engagement portion is inserted into one of the seat mode positioning portion and the carrycot mode positioning portion.

In a preferred embodiment, the driving lever has a force applying end and a force resisting end away from each other, as well as a shaft coupling portion between the force applying end and the force resisting end and being shaft-coupled with the rotary holder on which the driving lever is disposed, the switching assembly includes a traction member connected to the force applying end, and the force resisting end is pivotably swingingly connected to the actuation portion, so that the traction member makes the driving lever swing around an axis of the shaft coupling portion, while the force resisting end tows the actuation portion to make the locking member move.

In a preferred embodiment, the switching assembly includes a reset member extending along a moving direction of the locking member to have one end abutting against one end of the actuation portion away from the engagement portion and the other end abutting against the rotary holder, the actuation portion applies a pressure to the reset member to generate a reset elastic force when the driving lever drives the locking member to move until the bearing support is unlocked, and the locking member is reset by the reset elastic force to an extent that the bearing support is locked when the driving lever stops driving,.

In a preferred embodiment, the reset member is a compression spring, and one end of the actuation portion away from the engagement portion is provided with a boss for the reset member to sleeve on.

In a preferred embodiment, the actuation portion is provided with a rod portion extending from a same side with the engagement portion, and the driving lever is provided, at the force resisting end, with a receiving hole being inserted through by the rod portion, so as to pivotably swingingly connect to the actuation portion.

In a preferred embodiment, the shaft coupling portion is a shaft hole, the rotary holder, on which the driving lever is disposed, has a pivoting shaft, the pivoting shaft arranged correspondingly to the shaft coupling portion, and the driving lever is shaft-coupled with the rotary holder through the shaft coupling portion being inserted through by the pivoting shaft.

In a preferred embodiment, the switching assembly includes an operable operating member arranged on the bearing support, and the traction member is a cable having one end connected to the force applying end and the other end connected to the operating member, to pull the operating member to drive the force applying end through the traction member, and to interlink the actuation portion through the force resisting end to make the locking member move.

In a preferred embodiment, the operating member includes a pull portion and two sliders, the pull portion being pivotably arranged on the bearing support and having two guide rail portions disposed to be tilted; the two sliders being are disposed in the bearing support, and each of the sliders has a guide channel to engage with a corresponding guide rail portion, and a joint to connect with one end of the traction member, wherein the two sliders get closer to each other through being guided by the two guide rail portions as the pull portion is pulled, so as to interlink with the traction member to drive the force applying end.

In a preferred embodiment, the locking member further includes an extension portion and a blocking portion, the extension portion extends at one end of the engagement portion away from the actuation portion, and the extension portion and the actuation portion extends in opposite directions, the blocking portion is formed at one end of the extension portion away from the engagement portion and in a shape of a hook; the rotary holder is provided with an opening on a side wall, and has an elastic arm extending from the side wall in the opening, and the elastic arm has, at a tail end thereof, a convex portion laterally protruding from the side wall; and when the locking member is engaged and locked with one of the seat mode positioning portion and the carrycot mode positioning portion, the opening is aligned with the position of the extension portion, and the convex portion is pressed, so that the elastic arm leans from the opening towards the extension portion and blocks the blocking portion to restrict the locking member from detaching from the bearing support.

In a preferred embodiment, each of the fixing holders has a first side surface, each of the rotary holders has a second side surface, and the first side surface is opposite to the second side surface when each of the rotary holders is pivotably disposed on its corresponding fixing holder, wherein, in the first side surface and the second side surface, one has a convex limiting portion, and the other has a concave groove portion corresponding to the limiting portion, the groove portion is arc-shaped and has a predetermined arc length, wherein the limiting portion takes the predetermined arc length as a movable stroke in the groove portion, to limit a rotatable angle of the rotary holder.

In a preferred embodiment, the angle is in the range of 30 degrees to 45 degrees.

In a preferred embodiment, the bearing support is provided with a canopy frame.

In a preferred embodiment, the bearing support is connected to an accessory when the rotary holders on the opposite sides are at the seat position.

In a preferred embodiment, the accessory is a plate or a handrail.

In another embodiment of the present invention, a seat is provided, including a bearing support, two fixing holders, and a switching assembly, wherein at least one of the fixing holders has a seat mode positioning portion and a carrycot mode positioning portion being separated by an angle on the fixing holder; the bearing support is provided, on opposite sides, with rotary holders corresponding to each of the fixing holders, the rotary holders being rotatably arranged on the corresponding fixing holders, and the bearing support are configured to pivotably swing between a seat position and a carrycot position as the rotary holders rotate; and the switching assembly includes a locking member connected to a driving lever to be disposed on at least one of the rotary holders, wherein, when the driving lever is pulled by an external force, the locking member is driven to move away from its corresponding fixing holder, so that the bearing support is unlocked and allowed to pivotably swing between the seat position and the carrycot position, and after the external force disappears, the locking member is driven to move towards its corresponding fixing holder to engage with one of the seat mode positioning portion and the carrycot mode positioning portion, so that the bearing support is locked.

In another embodiment of the present invention, a bearing device is provided with the seat described above.

In this way, with the seat-bed dual-purpose support switching mechanism for a bearing device, the seat, and the bearing device according to the present disclosure, through a simple structure in which the locking member is connected to the driving lever, the driving lever drives the locking member to move to complete switching and locking of the bearing support during the switching between the seat mode and the carrycot mode, so as to achieve a simple structure for switching and locking of the bearing support between the seat mode and the carrycot mode and labor-saving operations.

### BRIEF DESCRIPTION OF THE DRAWINGS

In order to more clearly illustrate the technical solutions in embodiments of the present invention or the prior art, the accompanying drawings used in the description of the embodiments will be briefly introduced below. It is apparent that, the accompanying drawings in the following description are only some embodiments of the present invention, and other drawings can be obtained by those of ordinary skilled in the art from the provided drawings without exerting any creative efforts.
FIG. 1 is a schematic view showing that a bearing device is in a seat mode according to an embodiment of the present invention;
FIG. 2 is a schematic view showing that the bearing device is in a carrycot mode according to an embodiment of the present invention;
FIG. 3 is a perspective view of an assembly of a fixing holder and a rotary holder of a bearing support according to an embodiment of the present invention;
FIG. 4 is a perspective view of a connection between a locking member and a driving lever according to an embodiment of the present invention;
FIG. 5 is a three-dimensional view of an operating member being disposed on the bearing support according to an embodiment of the present invention;
FIG. 6 is a schematic view of arrangement of the operating member including a pull portion and sliders in the bearing support according to an embodiment of the present invention;
FIG. 7 is a perspective view of the rotary holder provided with an opening on a side wall and having an elastic arm according to an embodiment of the present invention;
FIG. 8 is a schematic sectional view showing that the elastic arm blocks a blocking portion when the locking member is at a lock position according to an embodiment of the present invention;
FIG. 9 is a schematic view of the fixing holder having a limiting portion in a groove portion of the rotary holder to limit a rotation angle of the rotary holder according to an embodiment of the present invention;
FIG. 10 is a schematic view of engagement and locking of the locking member with a seat mode positioning portion at the lock position when in the seat mode according to an embodiment of the present invention;
FIG. 11 is a schematic view showing that the driving lever in FIG. 10 is brought by a traction member to drive the locking member to move to an unlock position;
FIG. 12 is a schematic view showing that the rotary holder in FIG. 11 rotates from the seat position to the carrycot position; and
FIG. 13 is a schematic view showing that the locking member in FIG. 12 is reset by a reset member to the lock position to be engaged and locked with a carrycot mode positioning portion.

### Reference numerals:

100. support switching mechanism; 10. fixing holder; 11. seat mode positioning portion; 12. carrycot mode positioning portion; 13. first side surface; 14. limiting portion; 20. bearing support; 21. rotary holder; 211. pivoting shaft; 212. side wall; 213. opening; 214. elastic arm; 215. convex portion; 216. second side surface; 217. groove portion; 22. canopy frame; 23. accessory; 30. switching assembly; 40. locking member; 41. actuation portion; 411. boss; 412. rod portion; 42. engagement portion; 43. extension portion; 44. blocking portion; 50. driving lever; 51. force applying end; 52. force resisting end; 521. receiving hole; 53. shaft coupling portion; 60. operating member; 61. pull portion; 611. guide rail portion; 62. slider; 621. guide channel; 70. traction member; 80. reset member; 200. main frame body; 201. handrail; P1. seat position; P2. carrycot position; P3. lock position; P4. unlock position; A. side wall surface.

### DETAILED DESCRIPTION OF THE EMBODIMENTS

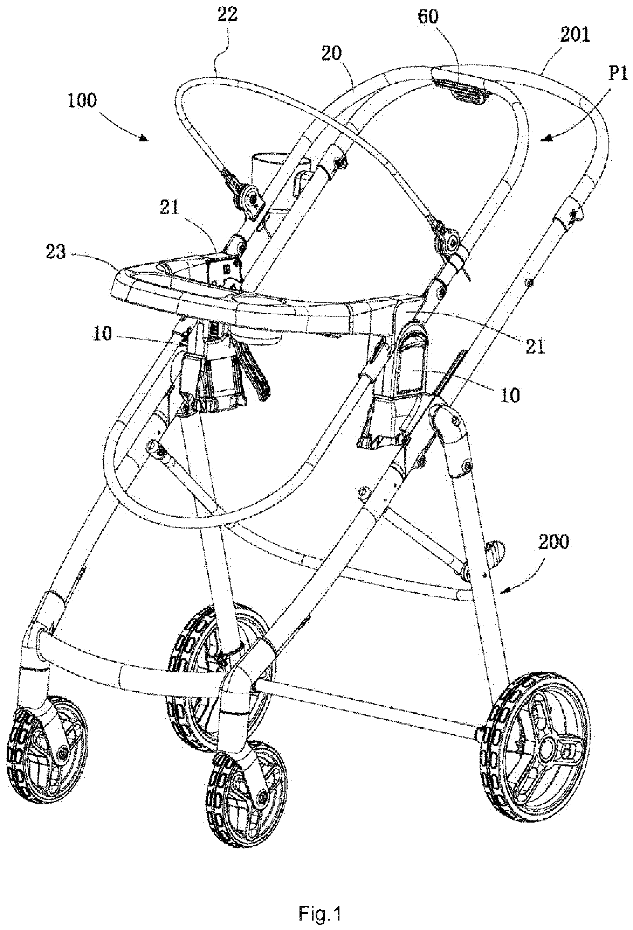

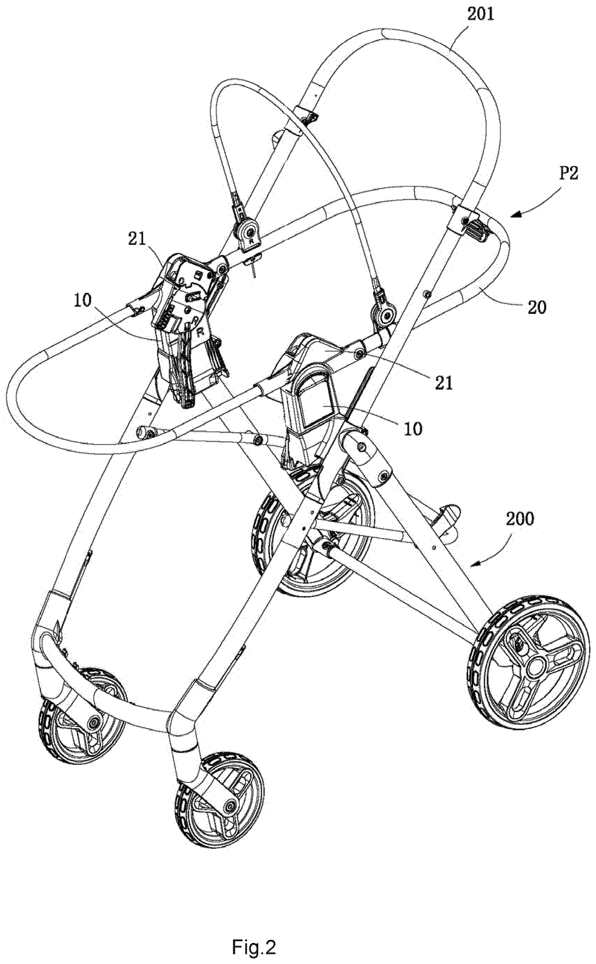

Referring to FIG. 1 to FIG. 13, the present disclosure provides a seat-bed dual-purpose support switching mechanism 100 for a bearing device. The bearing device herein is, for example, a baby stroller for carrying babies and walking by pushing, including a main frame body 200. The support switching mechanism 100 is disposed on the main frame body 200. The support switching mechanism 100 may be in a form of a seat to be mounted to the main frame body 200 of the bearing device in this embodiment, so as to provide switching between a seat mode (as shown in FIG. 1) and a carrycot mode (as shown in FIG. 2), which allows a baby to sit in a sitting position in the seat mode and to lie flat in a lying position in the carrycot mode.

The support switching mechanism 100 includes two fixing holders 10, a bearing support 20, and a switching assembly 30.

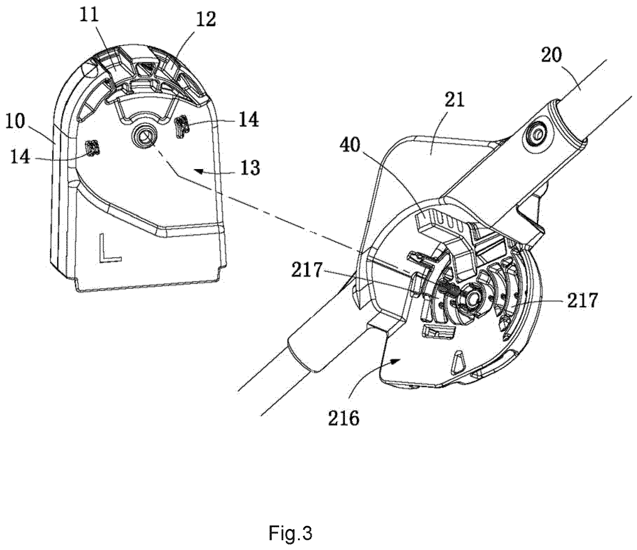

As shown in FIG. 1 and FIG. 2, the two fixing holders 10 are respectively fixed to opposite sides of the main frame body 200. In this embodiment, each one of the two fixing holders 10 has a seat mode positioning portion 11 and a carrycot mode positioning portion 12, and the seat mode positioning portion 11 and the carrycot mode positioning portion 12 are separated by an angle on the fixing holder 10 (as shown in FIG. 3).

As shown in FIG. 1 and FIG. 2, the bearing support 20 is provided, on opposite sides, with rotary holders 21 corresponding to the fixing holders 10, the rotary holders 21 are rotatably arranged on their corresponding fixing holders 10, and the bearing support 20 is configured to pivotably swinging between a seat position P1 (as shown in FIG. 1) and a carrycot position P2 (as shown in FIG. 2) as the rotary holders 21 rotate. The bearing support 20 may be provided with a seat cover (not shown in the figures). The seat cover allows a baby to sit in a sitting position as the bearing support 20 is at the seat position P1, and to lie flat in a lying position as the bearing support 20 is at the carrycot position P2. Therefore, when the bearing support 20 pivotably swings to the seat position P1 and is locked, it is the seat mode. In addition, when the bearing support 20 pivotably swings to the carrycot position P2 and is locked, it is the carrycot mode. As shown in FIG. 1 and FIG. 2, the bearing support 20 in this embodiment is provided with a canopy frame 22, and the bearing support 20 may be provided with an accessory 23 on the rotary holders 21 on the opposite sides, such as a dinner plate or a handrail, especially when the bearing support 20 is at the seat position P1.

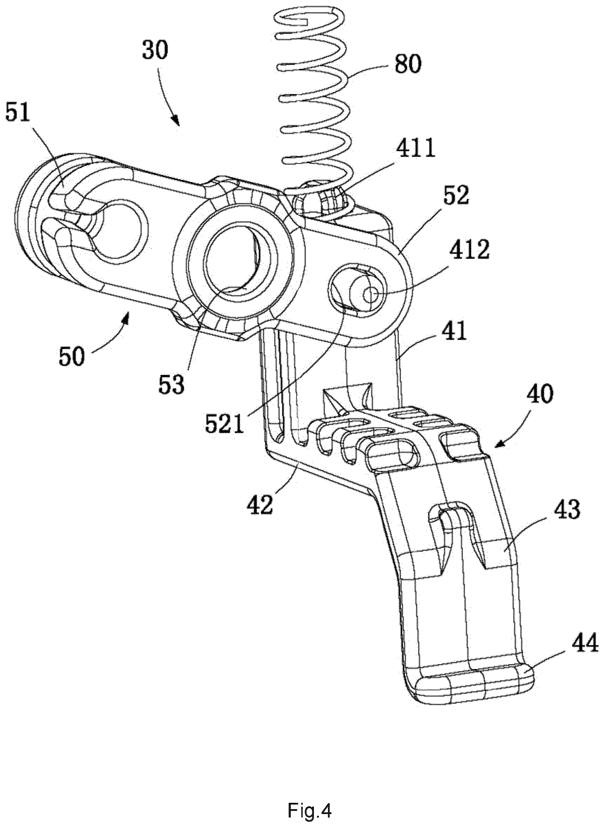

The switching assembly 30 is provided with a locking member 40 connected to a driving lever 50 on each rotary holder 21 respectively in this embodiment (as shown in FIG. 4). When the driving lever 50 is pulled by an external force, the driving lever 50 drives the locking member 40 to move away from its corresponding fixing holder 10, so that the bearing support 20 is unlocked, and the bearing support 20 is then allowed to pivotably swing between the seat position P1 and the carrycot position P2. After the external force disappears, the locking member 40 is driven to move towards its corresponding fixing holder 10 to engage with one of the seat mode positioning portion 11 and the carrycot mode positioning portion 12, so that the bearing support 20 is locked. In this case, the bearing support 20 cannot pivotably swing between the seat position P1 and the carrycot position P2.

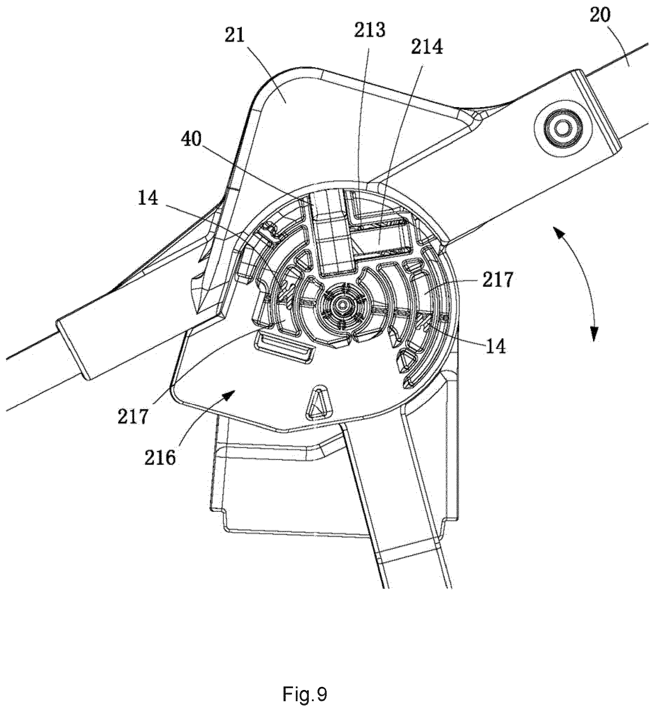

Specifically, referring to FIG. 9 to FIG. 12, the locking member 40 can move linearly between a lock position P3 and an unlock position P4 through the driving of the driving lever 50. When the bearing support 20 pivotably swings to the seat position P1, the locking member 40 can be aligned with the seat mode positioning portion 11, and the driving lever 50 drives the locking member 40 to move to the lock position P3 to be engaged and locked with the seat mode positioning portion 11. Alternatively, when the bearing support 20 pivotably swings to the carrycot position P2, the locking member 40 can be aligned with the carrycot mode positioning portion 12, and the driving lever 50 drives the locking member 40 to move to the lock position P3 to be engaged and locked with the carrycot mode positioning portion 12. In addition, when the driving lever 50 drives the locking member 40 to move to the unlock position P4, the locking member 40 is disengaged from one of the seat mode positioning portion 11 and the carrycot mode positioning portion 12, so that the bearing support 20 can pivotably swing between the seat position P1 and the carrycot position P2 freely.

In the embodiments described above, the two fixing holders 10 both have a seat mode positioning portion 11 and a carrycot mode positioning portion 12, and the rotary holders 21 are each provided with a locking member 40 and a driving lever 50, so that the locking member 40 can engage with and lock one of the seat mode positioning portion 11 and the carrycot mode positioning portion 12 between the two fixing holders 10 and the corresponding two rotary holders 21, but the present disclosures is not limited thereto. For example, only the fixing holder 10 has the seat mode positioning portion 11 and the carrycot mode positioning portion 12, and the rotary holder 21 is provided with the locking member 40 and the driving lever 50 corresponding to the fixing holder 10, which can also achieve the effect that the locking member 40 engages with and locks one of the seat mode positioning portion 11 and the carrycot mode positioning portion 12.

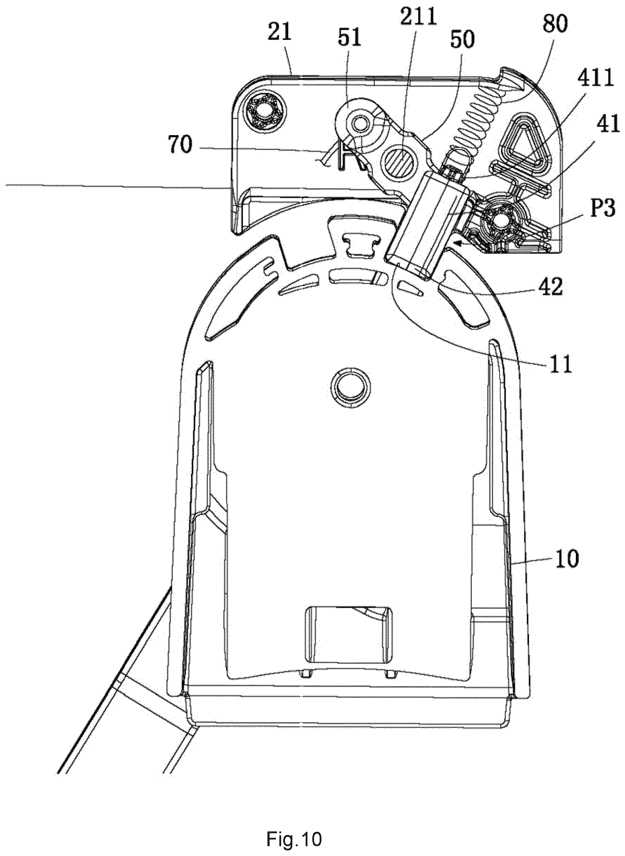

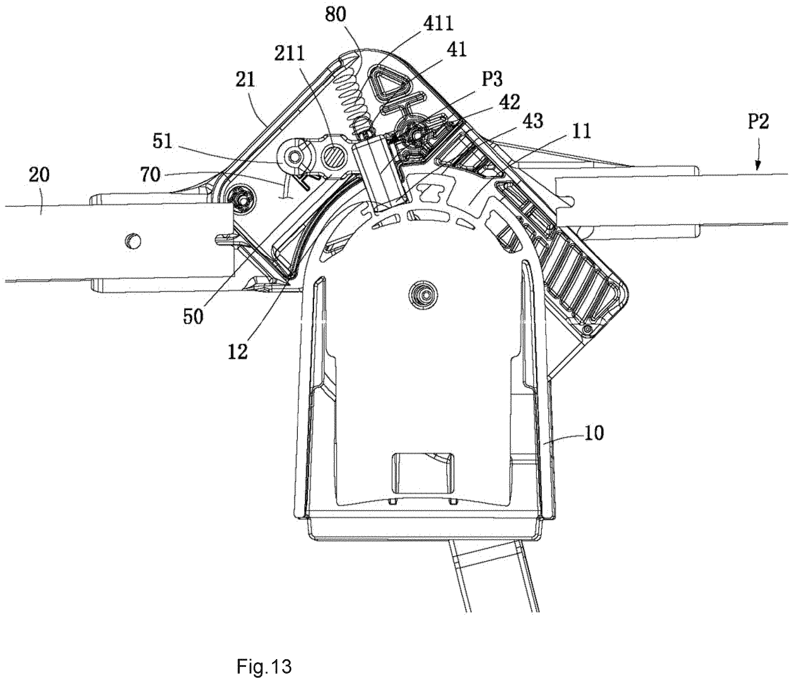

In one preferred embodiment, as shown in FIG. 3, the fixing holder 10 is integrally formed, and each of the seat mode positioning portion 11 and the carrycot mode positioning portion 12 is a positioning groove formed by recessing from the fixing holder 10. As shown in FIG. 4, the locking member 40 in this embodiment includes an actuation portion 41 and an engagement portion 42, and the engagement portion 42 extends laterally from one end of the actuation portion 41. When the locking member 40 is aligned with the seat mode positioning portion 11 and moves to the lock position P3, the engagement portion 42 is inserted into the seat mode positioning portion 11 for engagement and locking (as shown in FIG. 10). In this case, the bearing support 20 is positioned at the seat position P1 and is in the seat mode. In addition, when the locking member 40 is aligned with the carrycot mode positioning portion 12 and also moves to the lock position P3, the engagement portion 42 is inserted into the carrycot mode positioning portion 12 for engagement and locking (as shown in FIG. 13). In this case, the bearing support 20 is positioned at the carrycot position P2 and is in the carry cot mode.

As shown in FIG. 4, the driving lever 50 has a force applying end 51 and a force resisting end 52 away from each other, and a shaft coupling portion 53 between the force applying end 51 and the force resisting end 52, which is shaft-coupled with the rotary holder 21 on which the driving lever 50 is disposed. Preferably, the shaft coupling portion 53 in this embodiment is a shaft hole, the rotary holder 21 disposed with the driving lever 50 has a pivoting shaft 211 (as shown in FIG. 10 to FIG. 13) arranged corresponding to the shaft coupling portion 53, and the driving lever 50 is inserted by the pivoting shaft 211 at the shaft coupling portion 53 to enable the driver lever 50 to be shaft-coupled with the rotary holder 21 on which the driving lever 50 is disposed.

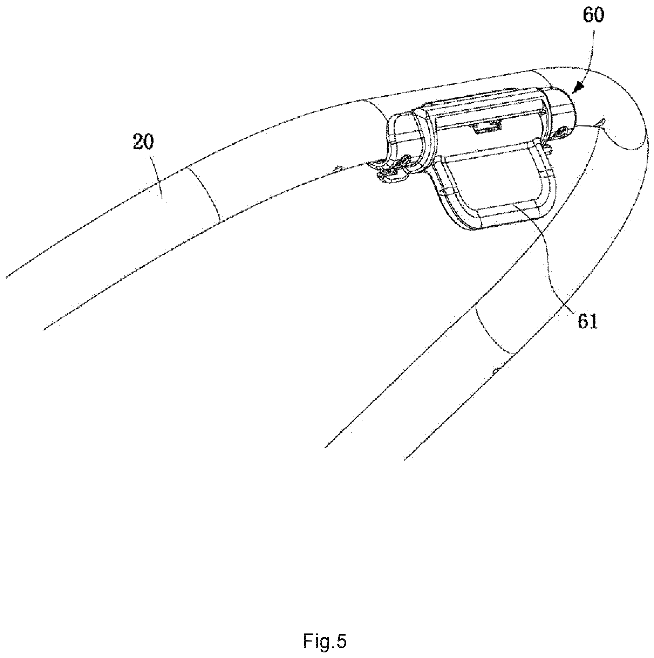

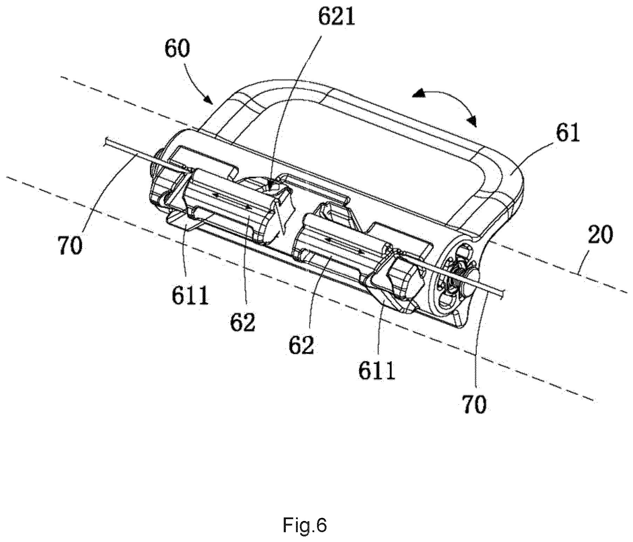

As shown in FIG. 5 and FIG. 6, the switching assembly 30 includes an operable operating member 60 and a traction member 70. The operating member 60 is arranged on the bearing support 20, and is roughly located at a handrail 201 of the main frame body 200 in this embodiment. The traction member 70 is a cable in this embodiment, and has one end connected to the force applying end 51 and the other end connected to the operating member 60. The force resisting end 52 is pivotably swingingly connected to the actuation portion 41, and the operating member 60 is pulled to drive the force applying end 51 through the traction member 70 so as to make the driving lever 50 swing around an axis of the shaft coupling portion 53, while the locking member 40 is driven to move between the lock position P3 and the unlock position P4 through the force resisting end 52 interlinking with the actuation portion 41.

As shown in FIG. 6, the operating member 60 further includes a pull portion 61 and two sliders 62 in this embodiment. The pull portion 61 is pivotably arranged on the bearing support 20 and can be pulled, and the pull portion 61 has two guide rail portions 611. The two guide rail portions 611 are disposed to be tilted. The two sliders 62 are arranged in the bearing support 20 and each have a guide channel 621 engaging with the guiding portion 611, and each slider 62 has a joint (not shown in the figure) to connect with one end of the traction member 70. When the pull portion 61 is pulled, the two sliders 62 get close to each other through being guided by the two guide rail portions 611, and interlink the traction member 70 to drive the force applying end 51 connected to the other end of the traction member 70.

As shown in FIG. 4, the switching assembly 30 further includes a reset member 80. The reset member 80extends along a moving direction of the locking member 40, and the reset member 80 has one end abutting against one end of the actuation portion 41 away from the engagement portion 42 and the other end abutting against an inner side wall of the rotary holder 21 (as shown in FIG. 10 to FIG. 13). When the driving lever 50 drives the locking member 40 to move to the unlock position P4, the actuation portion 41 applies a pressure to the reset member 80 to generate a reset elastic force, and when the driving lever 50 stops driving, the locking member 40 may be reset to the lock position P3 by the reset elastic force.

The reset member 80 mentioned above is a compression spring, and one end of the actuation portion 41 away from the engagement portion 42 is provided with a boss 411. The boss 411 is provided for the reset member 80 to sleeve on, so that the reset member 80 cannot easily slip to escape from the actuation portion 41 against which it abuts. In addition, the actuation portion 41 is provided with a rod portion 412, the rod portion 412 extends from a same side with the engagement portion 42, and the driving lever 50 is provided with a receiving hole 521 at the force resisting end 52. The driving lever 50 is pivotably swingingly connected to the actuation portion 41 via the receiving hole 521 being inserted by the rod portion 412.

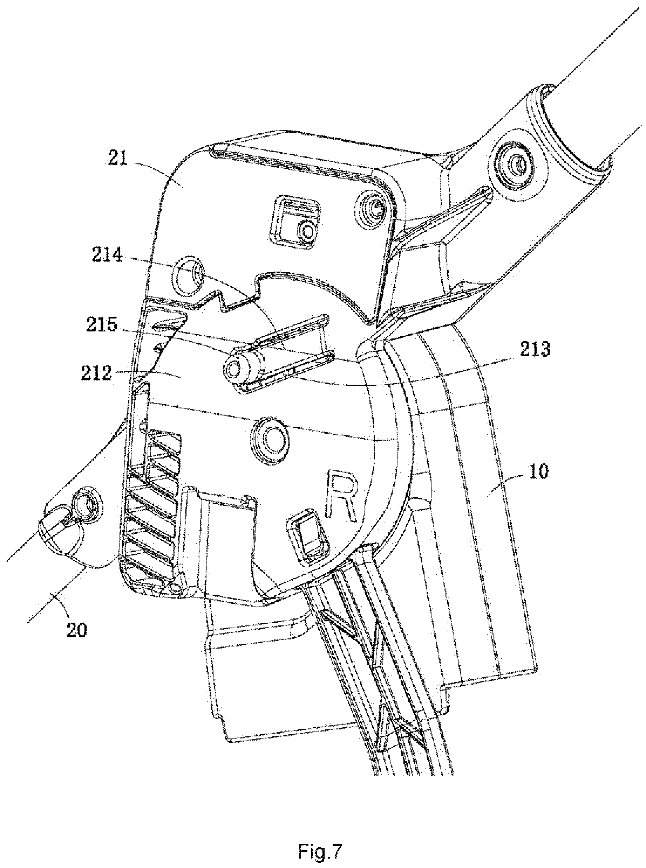

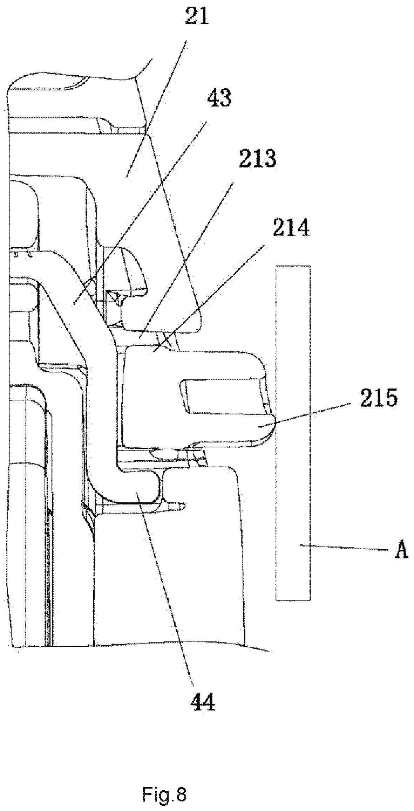

As shown in FIG. 4, the locking member 40 further includes an extension portion 43 and a blocking portion 44, the extension portion 43 is extended at one end of the engagement portion 42 away from the actuation portion 41, and the extension portion 43 and the actuation portion 41 are extended in opposite directions. The blocking portion 44 is formed at one end of the extension portion 43 away from the engagement portion 42 and in a shape of a hook. As shown in FIG. 7, the rotary holder 21 is provided with an opening 213 on a side wall 212, and the rotary holder 21 has an elastic arm 214 extending from the side wall 212 in the opening 213. The elastic arm 214 has a convex portion 215 at a tail end thereof. The convex portion 215 laterally protrudes relative to the side wall 212. When the locking member 40 is at the lock position P3 and is engaged and locked with one of the seat mode positioning portion 11 and the carrycot mode positioning portion 12, the opening 213 is aligned with the position of the extension portion 43, and the convex portion 215 is pressed, so that the elastic arm 214 leans from the opening 213 towards the extension portion 43 and blocks the blocking portion 44 to restrict the locking member 40 from detaching from the lock position P3. For example, in the seat mode (as shown in FIG. 1). a vehicle seat (not shown in the figure) may be fixed to the bearing support 20. The vehicle seat presses against the convex portion 215 corresponding to a side wall surface A at a position where the convex portion 215 (as shown in FIG. 8) is located, and in this case, the elastic arm 214 blocks the blocking portion 44, and the bearing support 20 is locked at the seat position P1. At this time, after the vehicle seat is stuck in the bearing support 20, detachment of the blocking portion 44 from the lock position P3 can be prevented, so that the vehicle seat cannot be adjusted from the seat position P1 to the carrycot position P2 after being stuck. In this way, back flip of the vehicle seat caused by an incorrect use angle can be prevented, so as to ensure the safety of the vehicle seat in terms of the use. That is, the vehicle seat can be engaged only at the seat position P1. Therefore, if the user intends to change the bearing support 20 from the seat position P1 to the carrycot position P2, the vehicle seat must be removed. After the vehicle seat or the side wall surface A is removed, no force will press against the convex portion 215, such that the elastic arm 214 will restore its original position and then no longer block the blocking portion 44. In this case, the bearing support 20 may be allowed to pivotably swing to the carrycot position P2.

As shown in FIG. 3, each of the fixing holders 10 has a first side surface 13, and each of the rotary holders 21 has a second side surface 216. The first side surface 13 is opposite to the second side surface 216 when each of the rotary holders 21 is pivotably disposed on its corresponding fixing holder 10. As shown in FIG. 3 and FIG. 9, each of the fixing holders 10 has two convex limiting portions 14 on the first side surface 13, and each of the rotary holders 21 has concave groove portions 217 corresponding to the limiting portions 14 on the second side surface 216. The groove portion 217 is arc-shaped and has a predetermined arc length. The limiting portion 14 takes the predetermined arc length as a movable stroke in the groove portion 217 and thereby limits a rotatable angle of the rotary holder 21 The angle is in the range of 30 degrees to 45 degrees in this embodiment, preferably 42.5 degrees, but the present disclosure is not limited to the angle.

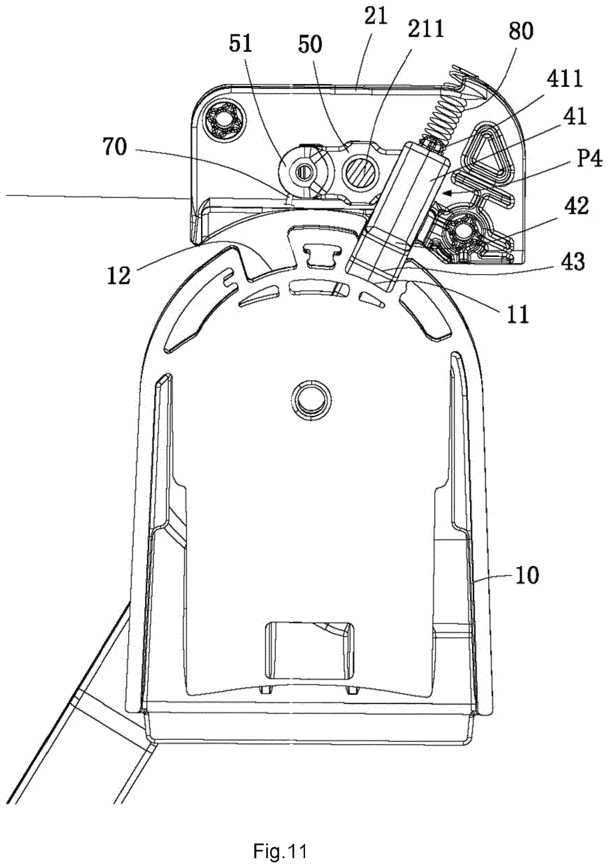

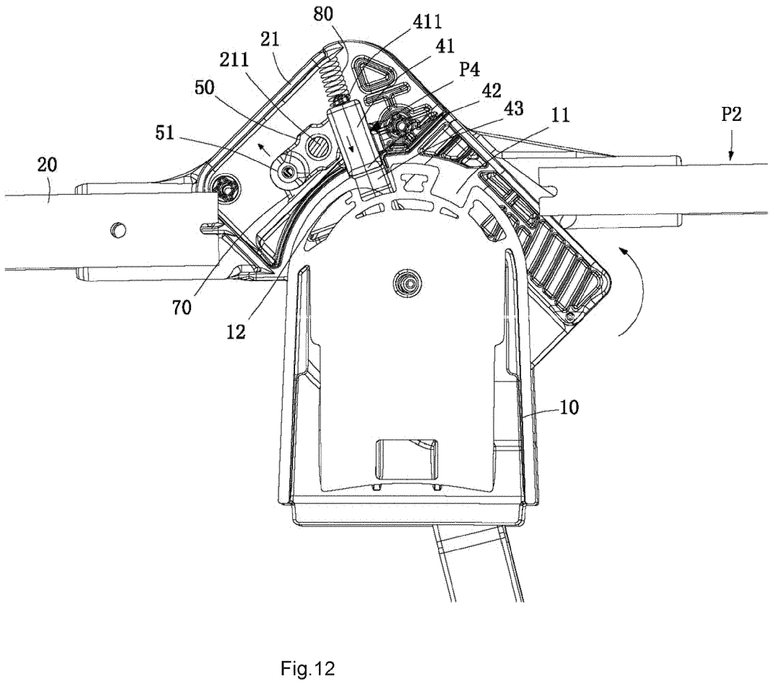

In an actual operation, if the bearing support 20 has been at the seat position P1 on the main frame body 200 and is in the seat mode (as shown in FIG. 1), if the bearing support 20 is to be switched to the carrycot position P2, a user may pull the operating member 60 to interlink, through the traction member 70, with the driving lever 50 to drive the locking member 40 to move from the lock position P3 to the unlock position P4 (as shown in FIG. 10 and FIG. 11), so that the locking member 40 can be disengaged from the seat mode positioning portion 11, and the bearing support 20 can pivotably swing to the carrycot position P2 (as shown in FIG. 12) and thus be in the carrycot mode. In this case, the pull on the operating member 60 is released, the locking member 40 is reset to the lock position P3 by the reset elastic force of the reset member 80 and is engaged and locked with the carrycot mode positioning portion 12 (as shown in FIG. 13), the bearing support 20 is locked at the carrycot position P2, and the convex portion 215 is pressed by the vehicle carrycot or the side wall surface A to cause the elastic arm 214 to lean towards the extension portion 43 to block the blocking portion 44 (as shown in FIG. 8), so as to restrict the locking member 40 from detaching from the lock position P3, and so that the vehicle carrycot cannot be adjusted from the carrycot position P2 to the seat position P 1 after being stuck. If the bearing support 20 is to be switched from the carrycot mode to the seat mode, similarly, the vehicle carrycot must be removed. After the vehicle carrycot or the side wall surface A is removed, no force will press against the convex portion 215, such that the elastic arm 214 will restore its original position and then no longer block the blocking portion 44. In this case, the bearing support 20 may be allowed to pivotably swing to the seat position P1. A difference from the above operating manner only lies in that the bearing support 20 swings from the carrycot position P2 back to the seat position P1 after the locking member 40 is disengaged from the carrycot positioning portion 12, and the remaining operations are the same. Therefore, details are omitted herein.

From the above description, it is apparent to find the following characteristics of the present invention.
1. In the seat-bed dual-purpose support switching mechanism 100 for a bearing device according to the present invention, the locking member 40 is connected to the driving lever 50, and the locking member 40 can be driven to move between the lock position P3 and the unlock position P4 with less effort through a seesaw-like action of the driving lever 50. By means of the simple structure, switching and locking of the bearing support 20 between the seat mode and the carrycot mode can be obtained, so as to achieve a simple structure and labor-saving operations.
2. When the bearing device according to the present invention is engaged with a vehicle seat, the bearing support 20 can be engaged with the vehicle seat only when at the seat position P1, and when engaged with the vehicle seat, the bearing support can block the blocking portion 44 with the elastic arm 214, thereby restricting the locking member 40 from detaching from the lock position P3, so as to prevent back flip of the vehicle seat caused by an incorrect use angle and ensure the safety of the vehicle seat in terms of the use.
3. In the seat-bed dual-purpose support switching mechanism 100 for a bearing device according to the present invention, the switching assembly 30 is further provided with the operating member 60 on the bearing support 20 and is connected to the driving lever 50 through the traction member 70, so that the operating member 60 can be arranged at a position convenient for the user to operate (e.g., at the handrail 201 of the main frame body 200 as shown in FIG. 1 and FIG. 2), and the movement of the locking member 40 can be operated remotely, so as to achieve the convenience of the remote operating.

## Claims

1. A support switching mechanism (100) for a bearing device, the bearing device comprising a main frame body (200) , wherein the support switching mechanism (100) comprises:
two fixing holders (10) respectively fixed to opposite sides of the main frame body (200) , at least one of the fixing holders (10) having a seat mode positioning portion (11) and a carrycot mode positioning portion (12) being separated by an angle on the fixing holder (10) ; and
a bearing support (20) provided, on opposite sides, with rotary holders (21) corresponding to each of the fixing holders (10) , each of the rotary holders (21) being rotatably arranged on its corresponding fixing holder (10) , and the bearing support (20) being configured to pivotably swing between a seat position (P1) and a carrycot position (P2) as the rotary holders (21) rotate; and
a switching assembly (30) disposed on at least one of the rotary holders (21) and having a driving lever (50) and a locking member (40) connected with the driving lever (50) ,
wherein, when the driving lever (50) is pulled by an external force, the locking member (40) is driven to move away from its corresponding fixing holder (10) , so that the bearing support (20) is unlocked and allowed to pivotably swing between the seat position (P1) and the carrycot position (P2) , and after the external force disappears, the locking member (40) is driven to move towards its corresponding fixing holder (10) to engage with one of the seat mode positioning portion (11) and the carrycot mode positioning portion (12) , so that the bearing support (20) is locked;
**characterized in that**
the driving lever (50) is pivotably swingingly connected to the locking member (40).

2. The support switching mechanism (100) for the bearing device according to claim 1, wherein the locking member (40) comprises an actuation portion (41) and an engagement portion (42) extending laterally from one end of the actuation portion (41) ,
wherein each of the seat mode positioning portion (11) and the carrycot mode positioning portion (12) is a positioning groove, and the locking member (40) is engaged and locked when the engagement portion is inserted into one of the seat mode positioning portion (11) and the carrycot mode positioning portion (12) .

3. The support switching mechanism (100) for the bearing device according to claim 2, wherein: the driving lever (50) has a force applying end (51) and a force resisting end (52) away from each other, as well as a shaft coupling portion (53) between the force applying end (51) and the force resisting end (52) and being shaft-coupled with the rotary holder (21) on which the driving lever (50) is disposed,
wherein the switching assembly (30) comprises a traction member (70) connected to the force applying end (51) , and the force resisting end (52) is pivotably swingingly connected to the actuation portion (41) , so that the traction member (70) makes the driving lever (50) swing around an axis of the shaft coupling portion (53) , while the force resisting end (52) tows the actuation portion (41) to make the locking member (40) move.

4. The support switching mechanism (100) for the bearing device according to claim 3, wherein: the switching assembly (30) comprises a reset member (80) extending along a moving direction of the locking member (40) to have one end abutting against one end of the actuation portion (41) away from the engagement portion (42) and the other end abutting against the rotary holder (21) , the actuation portion (41) applies a pressure to the reset member (80) to generate a reset elastic force when the driving lever (50) drives the locking member (40) to move until the bearing support (20) is unlocked, and the locking member (40) is reset by the reset elastic force to an extent that the bearing support (20) is locked when the driving lever (50) stops driving.

5. The support switching mechanism (100) for the bearing device according to claim 4, wherein: the reset member (80) is a compression spring, and one end of the actuation portion (41) away from the engagement portion (42) is provided with a boss (411) for the reset member (80) to sleeve on.

6. The support switching mechanism (100) for the bearing device according to claim 4 or 5, wherein: the actuation portion (41) is provided with a rod portion (412) extending from a same side with the engagement portion (42) , and the driving lever (50) is provided, at the force resisting end (52) , with a receiving hole (521) being inserted through by the rod portion (412) , so as to pivotably swingingly connect to the actuation portion (41) .

7. The support switching mechanism (100) for the bearing device according to one of claims 3 to 6, wherein: the shaft coupling portion (53) is a shaft hole, the rotary holder (21) , on which the driving lever (50) is disposed, has a pivoting shaft (211) arranged correspondingly to the shaft coupling portion (53) , and the driving lever (50) is shaft-coupled with the rotary holder (21) through the shaft coupling portion (53) being inserted through by the pivoting shaft (211) .

8. The support switching mechanism (100) for the bearing device according to one of claims 3 to 7, wherein: the switching assembly (30) comprises an operable operating member (60) arranged on the bearing support (20) , and the traction member (70) is a cable having one end connected to the force applying end (51) and the other end connected to the operating member (60) , to pull the operating member (60) to drive the force applying end (51) through the traction member (70) , and to interlink with the actuation portion (41) through the force resisting end (52) to make the locking member (40) move.

9. The support switching mechanism (100) for the bearing device according to claim 8, wherein:
the operating member (60) comprises a pull portion (61) and two sliders (62), the pull portion (61) being pivotably arranged on the bearing support (20) and having two guide rail portions (611) disposed to be tilted, the two sliders (62) being disposed in the bearing support (20) , each of the sliders (62) having a guide channel (621) to engage with a corresponding guide rail portion (611) and having a joint to connect with one end of the traction member (70) ,
wherein the two sliders (62) get close to each other through being guided by the two guide rail portions (611) as the pull portion (61) is pulled, so as to interlink with the traction member (70) to drive the force applying end (51) .

10. The support switching mechanism (100) for the bearing device according to one of claims 2 to 9, wherein:
the locking member (40) further comprises an extension portion (43) and a blocking portion (44) , the extension portion (43) being extended at one end of the engagement portion (42) away from the actuation portion (41) , the extension portion (43) and the actuation portion (41) being extended in opposite directions, and the blocking portion (44) being formed at one end of the extension portion (43) away from the engagement portion (42) and in a shape of a hook;
the rotary holder (21) is provided with an opening (213) on a side wall (212) , and the rotary holder (21) has an elastic arm (214) extending from the side wall (212) in the opening (213) and having, at a tail end thereof, a convex portion (215) laterally protruding from the side wall (212) ; and
when the locking member (40) is engaged and locked by one of the seat mode positioning portion (11) and the carrycot mode positioning portion (12) , the opening (213) is aligned with the position of the extension portion (43) , and the convex portion (215) is pressed, so that the elastic arm (214) leans from the opening (213) towards the extension portion (43) and blocks the blocking portion (44) to restrict the locking member (40) from detaching from the bearing support (20) .

11. The support switching mechanism (100) for the bearing device according to one of the preceding claims, wherein each of the fixing holders (10) has a first side surface (13) , and each of the rotary holders (21) has a second side surface (216) , the first side surface (13) being opposite to the second side surface (216) when each of the rotary holders (21) is pivotably disposed on its corresponding fixing holder (10) ,
wherein in the first side surface (13) and the second side surface (216) , one has a convex limiting portion (14) , and the other has a concave groove portion (217) corresponding to the limiting portion (14) , the groove portion (217) being arc-shaped and having a predetermined arc length, wherein the limiting portion (14) takes the predetermined arc length as a movable stroke in the groove portion (217) and thereby limits a rotatable angle of the rotary holder (21) .

12. The support switching mechanism (100) for the bearing device according to claim 11, wherein the angle is in the range of 30 degrees to 45 degrees.

13. The support switching mechanism (100) for the bearing device according to one of the preceding claims, wherein the bearing support (20) is provided with a canopy frame (22) , and/or the rotary holders (21) on the opposite sides of the bearing support (20) are connected to an accessory (23) at the seat position (P1), wherein the accessory (23) is a dinner plate or a handrail.

14. A seat, being **characterised by** comprising the support switching mechanism (100) according to any one of claims 1 to 13.

15. A bearing device, **characterized in that** the bearing device is provided with the seat according to claim 14, or is provided with the support switching mechanism (100) according to claim 1.

## Patentansprüche

1. Stützenumstellmechanismus (100) für eine Lagervorrichtung, wobei die Lagervorrichtung einen Hauptrahmenkörper (200) umfasst, wobei der Stützenumstellmechanismus (100) umfasst:
zwei Fixierhalterungen (10), die jeweils an einander gegenüberliegenden Seiten des Hauptrahmenkörpers (200) fixiert sind, wobei mindestens eine von den Fixierhalterungen (10) einen Sitzmodus-Positionierungsabschnitt (11) und einen Tragebettmodus-Positionierungsabschnitt (12) aufweist, die über einen Winkel an der Fixierhalterung (10) getrennt sind; und
eine Lagerstütze (20), die an einander gegenüberliegen Seiten mit Drehhalterungen (21) ausgestattet ist, die jeder von den Fixierhalterungen (10) entsprechen, wobei jede der Drehhalterungen (21) drehbar an ihrer entsprechenden Fixierhalterung (10) angeordnet ist, und die Lagerstütze (20) ausgestaltet ist, um einen Drehpunkt zwischen einer Sitzposition (P1) und einer Tragebettposition (P2) zu schwingen, wenn sich die Drehhalterungen (21) drehen; und
eine Umstellbaugruppe (30), die an zumindest einer von den Drehhalterungen (21) angeordnet ist und einen Antriebshebel (50) und ein Verrastungselement (40) aufweist, das mit dem Antriebshebel (50) verbunden ist,
wobei, wenn an dem Antriebshebel (50) durch eine externe Kraft gezogen wird, das Verrastungselement (40) dazu getrieben wird, sich von seiner entsprechenden Fixierhalterung (10) wegzubewegen, so dass die Lagerstütze (20) entrastet wird, und in der Lage ist, um einen Drehpunkt zwischen der Sitzposition (P1) und der Tragebettposition (P2) zu schwingen, und nachdem die externe Kraft nicht mehr ausgeübt wird, das Verrastungselement (40) dazu getrieben wird, sich zu seiner entsprechenden Fixierhalterung (10) zu bewegen, um in den Sitzmodus-Positionierungsabschnitt (11) oder den Tragebettmodus-Positionierungsabschnitt (12) einzugreifen, so dass die Lagerstütze (20) eingerastet wird;
**dadurch gekennzeichnet, dass**
der Antriebshebel (50) um einen Drehpunkt verschwenkbar mit dem Verrastungselement (40) verbunden ist.

2. Stützenumstellmechanismus (100) für die Lagervorrichtung nach Anspruch 1, wobei das Verrastungselement (40) einen Stellgliedabschnitt (41) und einen Eingriffsabschnitt (42), der lateral von einem Ende des Stellgliedabschnitts (41) vorsteht, umfasst,
wobei sowohl der Sitzmodus-Positionierungsabschnitt (11) als auch der Tragebettmodus-Positionierungsabschnitt (12) eine Positionierungsnut sind und das Verrastungselement (40) in Eingriff gebracht und eingerastet wird, wenn der Eingriffsabschnitt in den Sitzmodus-Positionierungsabschnitt (11) oder den Tragebettmodus-Positionierungsabschnitt (12) eingeführt wird.

3. Stützenumstellmechanismus (100) für die Lagervorrichtung nach Anspruch 2, wobei: der Antriebshebel (50) ein eine Kraft aufbringendes Ende (51) und ein einer Kraft widerstehendes Ende (52) aufweist, die voneinander entfernt sind, und einen Wellenkupplungsabschnitt (53) zwischen dem eine Kraft aufbringenden Ende (51) und dem einer Kraft widerstehenden Ende (52), und mit der Drehhalterung (21), an welcher der Antriebshebel (50) angeordnet ist, wellengekoppelt ist,
wobei die Umstellbaugruppe (30) ein Zugelement (70) umfasst, das mit dem eine Kraft aufbringenden Ende (51) verbunden ist, und das einer Kraft widerstehende Ende (52) um einen Drehpunkt verschwenkbar mit dem Stellgliedabschnitt (41) verbunden ist, so dass das Zugelement (70) den Antriebshebel (50) dazu veranlasst, um eine Achse des Wellenkupplungsabschnitts (53) zu schwingen, während das einer Kraft widerstehende Ende (52) den Stellgliedabschnitt (41) schleppt, um zu bewirken, dass sich das Verrastungselement (40) bewegt.

4. Stützenumstellmechanismus (100) für die Lagervorrichtung nach Anspruch 3, wobei: die Umstellbaugruppe (30) ein Rückstellelement (80) aufweist, das sich entlang einer Bewegungsrichtung des Verrastungselements (40) erstreckt, so dass ein Ende davon an einem Ende des Stellgliedabschnitts (41), das abseits von dem Eingriffsabschnitt (42) liegt, anstößt, und ein anderes Ende davon an der Drehhalterung (21) anstößt, wobei der Stellgliedabschnitt (41) einen Druck auf das Rückstellelement (80) ausübt, um eine elastische Rückstellkraft zu erzeugen, wenn der Antriebshebel (50) das Verrastungselement (40) dazu treibt, sich zu bewegen, bis die Lagerstütze (20) entrastet wird, und das Verrastungselement (40) durch die elastische Rückstellkraft in einem solchen Maß zurückgestellt wird, dass die Lagerstütze (20) eingerastet wird, wenn der Antriebshebel (50) das Antreiben stoppt.

5. Stützenumstellmechanismus (100) für die Lagervorrichtung nach Anspruch 4, wobei: das Rückstellelement (80) eine Druckfeder ist und ein Ende des Stellgliedabschnitts (41), das abseits von dem Eingriffsabschnitt (42) liegt, mit einer Wölbung (411) versehen ist, auf die das Rückstellelement (80) aufzuschieben ist.

6. Stützenumstellmechanismus (100) für die Lagervorrichtung nach Anspruch 4 oder 5, wobei: der Stellgliedabschnitt (41) mit einem Stababschnitt (412) ausgestattet ist, der von einer gleichen Seite wie der Eingriffsabschnitt (42) vorsteht, und der Antriebshebel (50) an dem einer Kraft widerstehenden Ende (52) mit einem Aufnahmeloch (521) ausgestattet ist, durch das der Stababschnitt (412) eingeführt ist, so dass er um einen Drehpunkt verschwenkbar mit dem Stellgliedabschnitt (41) verbunden ist.

7. Stützenumstellmechanismus (100) für die Lagervorrichtung nach einem der Ansprüche 3 bis 6,
wobei: der Wellenkupplungsabschnitt (53) ein Wellenloch ist, die Drehhalterung (21), an welcher der Antriebshebel (50) angeordnet ist, eine Schwenkwelle (211) aufweist, die dementsprechend an dem Wellenkupplungsabschnitt (53) angeordnet, und der Antriebshebel (50) durch den Wellenkupplungsabschnitt (53), der durch die Schwenkwelle (211) hindurch eingeführt ist, mit der Drehhalterung (21) wellengekoppelt ist.

8. Stützenumstellmechanismus (100) für die Lagervorrichtung nach einem der Ansprüche 3 bis 7, wobei: die Umstellbaugruppe (30) ein bedienbares Bedienelement (60) aufweist, das an der Lagerstütze (20) angeordnet ist, und das Zugelement (70) ein Kabel ist, von dem ein Ende mit dem Kraft aufbringenden Ende (51) verbunden ist und das andere Ende mit dem Bedienelement (60) verbunden ist, um an dem Bedienelement (60) zu ziehen, um das Kraft aufbringende Ende (51) durch das Zugelement (70) anzutreiben und um eine Kopplung mit dem Stellgliedabschnitt (41) durch das einer Kraft widerstehende Ende (52) herzustellen, um zu bewirken, dass sich das Verrastungselement (40) bewegt.

9. Stützenumstellmechanismus (100) für die Lagervorrichtung nach Anspruch 8, wobei: das Bedienelement (60) einen Ziehabschnitt (61) und zwei Gleiter (62) umfasst, wobei der Ziehabschnitt (61) verschwenkbar an der Lagerstütze (20) angeordnet ist und zwei Führungsschienenabschnitte (611) aufweist, die so angeordnet sind, dass sie zu neigen sind, wobei die zwei Gleiter (62) in der Lagerstütze (20) angeordnet sind, wobei jeder von den Gleitern (62) einen Führungskanal (621) aufweist, der mit einem entsprechenden Führungsschienenabschnitt (611) in Eingriff zu bringen ist und der einen Verbindungspunkt zur Verbindung mit einem Ende des Zugelements (70) aufweist,
wobei sich die zwei Gleiter (62) dadurch, dass sie von den zwei Führungsschienenabschnitten (611) geführt werden, einander annähern, wenn an dem Ziehabschnitt (61) gezogen wird, so dass eine Koppelung mit dem Zugelement (70) hergestellt wird, um das eine Kraft aufbringende Ende (51) anzutreiben.

10. Stützenumstellmechanismus (100) für die Lagervorrichtung nach einem der Ansprüche 2 bis 9, wobei:
das Verrastungselement (40) ferner einen vorstehenden Abschnitt (43) und einen Blockierabschnitt (44) umfasst, wobei der vorstehende Abschnitt (43) an einem Ende des Eingriffsabschnitts (42), das abseits von dem Stellgliedabschnitt (41) liegt, vorsteht, wobei der vorstehende Abschnitt (43) und der Stellgliedabschnitt (41) in einander entgegengesetzten Richtungen vorstehen und der Blockierabschnitt (44) an einem Ende des vorstehenden Abschnitts (43), das abseits von dem Eingriffsabschnitt (42) liegt, ausgebildet ist und die Form eines Hakens aufweist;
die Drehhalterung (21) mit einer Öffnung (213) an einer Seitenwand (212) ausgestattet ist und die Drehhalterung (21) einen elastischen Arm (214) aufweist, der von der Seitenwand (212) in der Öffnung (213) vorsteht und der an seinem hinteren Ende einen konvexen Abschnitt (215) aufweist, der lateral von der Seitenwand (212) vorragt; und
die Öffnung (213) an der Position des vorstehenden Abschnitts (43) ausgerichtet ist, wenn das Verrastungselement (40) mit dem Sitzmodus-Positionierungsabschnitt (11) oder dem Tragebettmodus-Positionierungsabschnitt (12) in Eingriff steht und eingerastet ist, und Druck auf den konvexen Abschnitt (215) ausgeübt wird, so dass sich der elastische Arm (214) von der Öffnung (213) zum vorstehenden Abschnitt (43) neigt und den Blockierabschnitt (44) blockiert, um das Verrastungselement (40) daran zu hindern, sich von der Lagerstütze (20) zu lösen.

11. Stützenumstellmechanismus (100) für die Lagervorrichtung nach einem der vorangehenden Ansprüche, wobei jede von den Fixierhalterungen (10) eine erste Seitenfläche (13) aufweist und jede von den Drehhalterungen (21) eine zweite Seitenfläche (216) aufweist, wobei die erste Seitenfläche (13) der zweiten Seitenfläche (216) gegenüberliegt, wenn jede von den Drehhalterungen (21) verschwenkbar an ihrer entsprechenden Fixierhalterung (10) angeordnet ist,
wobei eine von der ersten Seitenfläche (13) und der zweiten Seitenfläche (216) einen konvexen Begrenzungsabschnitt (14) aufweist und die andere einen konkaven Nutabschnitt (217), der dem Begrenzungsabschnitt (14) entspricht, aufweist, wobei der Nutabschnitt (217) bogenförmig ist und eine vorgegebene Bogenlänge aufweist, wobei der Begrenzungsabschnitt (14) die vorgegebene Bogenlänge als Hub nimmt, über den eine Bewegung in dem Nutabschnitt (217) möglich ist, und dadurch einen Winkel, über den sich die Drehhalterung (21) bewegen kann, begrenzt.

12. Stützenumstellmechanismus (100) für die Lagervorrichtung nach Anspruch 11, wobei der Winkel in einem Bereich von 30 Grad bis 45 Grad liegt.

13. Stützenumstellmechanismus (100) für die Lagervorrichtung nach einem der vorangehenden Ansprüche, wobei die Lagerhalterung (20) mit einem Sonnendachrahmen (22) ausgestattet ist und/oder die Drehhalterungen (21) auf den gegenüberliegenden Seiten der Lagerhalterung (20) mit einem Zubehörteil (23) an der Sitzposition (P1) verbunden sind, wobei das Zubehörteil (23) ein Speiseteller oder ein Handlauf ist.

14. Sitz, **dadurch gekennzeichnet, dass** er den Stützenumstellmechanismus (100) nach einem der Ansprüche 1 bis 13 umfasst.

15. Lagervorrichtung, **dadurch gekennzeichnet, dass** die Lagervorrichtung mit dem Sitz nach Anspruch 14 ausgestattet ist oder mit dem Stützenumstellmechanismus (100) nach Anspruch 1 ausgestattet ist.

## Revendications

1. Mécanisme de commutation de support (100) pour un dispositif de soutien et de transport, le dispositif de soutien et de transport comprenant un corps de châssis principal (200), dans lequel le mécanisme de commutation de support (100) comprend :
deux organes de retenue et de fixation (10) qui sont respectivement fixés sur des côtés opposés du corps de châssis principal (200), au moins l'un des organes de retenue et de fixation (10) comportant une section de positionnement en mode siège (11) et une section de positionnement en mode nacelle (12) qui sont séparées par un angle sur l'organe de retenue et de fixation (10) ; et
un support de soutien (20) qui est muni, sur des côtés opposés, d'organes de retenue rotatifs (21) qui correspondent à chacun des organes de retenue et de fixation (10), chacun des organes de retenue rotatifs (21) étant agencé à rotation sur son organe de retenue et de fixation correspondant (10), et le support de soutien (20) étant configuré pour être basculé de façon pivotante entre une position de siège (P1) et une position de nacelle (P2) lorsque les organes de retenue rotatifs (21) sont entraînés en rotation ; et
un assemblage de commutation (30) qui est disposé sur au moins l'un des organes de retenue rotatifs (21) et qui comporte un levier d'entraînement (50) et un élément de verrouillage (40) qui est connecté au levier d'entraînement (50),
dans lequel, lorsque le levier d'entraînement (50) est tiré par une force externe, l'élément de verrouillage (40) est entraîné de manière à être éloigné de son organe de retenue et de fixation correspondant (10) de telle sorte que le support de soutien (20) soit déverrouillé et puisse être basculé de façon pivotante entre la position de siège (P1) et la position de nacelle (P2), et après que la force externe a disparu, l'élément de verrouillage (40) est entraîné de manière à être rapproché de son organe de retenue et de fixation correspondant (10) pour être engagé avec une section parmi la section de positionnement en mode siège (11) et la section de positionnement en mode nacelle (12) de telle sorte que le support de soutien (20) soit verrouillé ;
**caractérisé en ce que** :
le levier d'entraînement (50) est connecté par basculement de façon pivotante à l'élément de verrouillage (40).

2. Mécanisme de commutation de support (100) pour le dispositif de soutien et de transport selon la revendication 1, dans lequel l'élément de verrouillage (40) comprend une section d'actionnement (41) et une section d'engagement (42) qui est étendue latéralement depuis une extrémité de la section d'actionnement (41) ; et dans lequel :
chaque section parmi la section de positionnement en mode siège (11) et la section de positionnement en mode nacelle (12) est une gorge de positionnement, et l'élément de verrouillage (40) est engagé et verrouillé lorsque la section d'engagement est insérée à l'intérieur d'une section parmi la section de positionnement en mode siège (11) et la section de positionnement en mode nacelle (12).

3. Mécanisme de commutation de support (100) pour le dispositif de soutien et de transport selon la revendication 2, dans leque : le levier d'entraînement (50) comporte une extrémité d'application de force (51) et une extrémité de résistance à la force (52) à distance l'une de l'autre, de même qu'une section de couplage d'arbre (53) qui est située entre l'extrémité d'application de force (51) et l'extrémité de résistance à la force (52) et qui est couplée selon un couplage d'arbre avec l'organe de retenue rotatif (21) sur lequel le levier d'entraînement (50) est disposé ; et dans lequel :
l'assemblage de commutation (30) comprend un élément de traction (70) qui est connecté à l'extrémité d'application de force (51), et l'extrémité de résistance à la force (52) est connectée par basculement de façon pivotante à la section d'actionnement (41) de telle sorte que l'élément de traction (70) fasse basculer le levier d'entraînement (50) autour d'un axe de la section de couplage d'arbre (53) tandis que l'extrémité de résistance à la force (52) exerce une traction sur la section d'actionnement (41) afin de provoquer le déplacement de l'élément de verrouillage (40).

4. Mécanisme de commutation de support (100) pour le dispositif de soutien et de transport selon la revendication 3, dans lequel l'assemblage de commutation (30) comprend un élément de réinitialisation (80) qui est étendu suivant une direction de déplacement de l'élément de verrouillage (40) de telle sorte que l'une de ses extrémités vienne en butée contre une extrémité de la section d'actionnement (41) à distance de la section d'engagement (42) et que son autre extrémité vienne en butée contre l'organe de retenue rotatif (21), que la section d'actionnement (41) applique une pression sur l'élément de réinitialisation (80) afin de générer une force élastique de réinitialisation lorsque le levier d'entraînement (50) entraîne l'élément de verrouillage (40) en déplacement jusqu'à ce que le support de soutien (20) soit déverrouillé, et que l'élément de verrouillage (40) soit réinitialisé par la force élastique de réinitialisation selon un degré qui soit tel que le support de soutien (20) soit verrouillé lorsque le levier d'entraînement (50) arrête son action d'entraînement.

5. Mécanisme de commutation de support (100) pour le dispositif de soutien et de transport selon la revendication 4, dans lequel l'élément de réinitialisation (80) est un ressort de compression et une extrémité de la section d'actionnement (41) à distance de la section d'engagement (42) est munie d'un bossage (411) pour que l'élément de réinitialisation (80) soit manchonné dessus.

6. Mécanisme de commutation de support (100) pour le dispositif de soutien et de transport selon la revendication 4 ou 5, dans lequel la section d'actionnement (41) est munie d'une section de tige (412) qui est étendue depuis un même côté que la section d'engagement (42) et le levier d'entraînement (50) est muni, au niveau de l'extrémité de résistance à la force (52), d'un orifice de réception (521) au travers duquel la section de tige (412) est insérée de telle sorte qu'elle soit connectée par basculement de façon pivotante à la section d'actionnement (41).

7. Mécanisme de commutation de support (100) pour le dispositif de soutien et de transport selon l'une quelconque des revendications 3 à 6,
dans lequel la section de couplage d'arbre (53) est un orifice d'arbre, l'organe de retenue rotatif (21), sur lequel le levier d'entraînement (50) est disposé, comporte un arbre pivotant (211) qui est agencé en correspondance avec la section de couplage d'arbre (53) et le levier d'entraînement (50) est couplé selon un couplage d'arbre avec l'organe de retenue rotatif (21) par l'intermédiaire de la section de couplage d'arbre (53) qui est insérée au travers de l'arbre pivotant (211).

8. Mécanisme de commutation de support (100) pour le dispositif de soutien et de transport selon l'une quelconque des revendications 3 à 7, dans lequel l'assemblage de commutation (30) comprend un élément de commande pouvant être commandé (60) qui est agencé sur le support de soutien (20), et l'élément de traction (70) est un câble dont l'une des extrémités est connectée à l'extrémité d'application de force (51) et dont l'autre extrémité est connectée à l'élément de commande (60) afin de tirer l'élément de commande (60) pour entraîner l'extrémité d'application de force (51) par l'intermédiaire de l'élément de traction (70) et afin de réaliser une inter-liaison avec la section d'actionnement (41) par l'intermédiaire de l'extrémité de résistance à la force (52) dans le but de provoquer le déplacement de l'élément de verrouillage (40).

9. Mécanisme de commutation de support (100) pour le dispositif de soutien et de transport selon la revendication 8, dans lequel l'élément de commande (60) comprend une section de tirage (61) et deux coulisseaux (62), la section de tirage (61) étant agencée de façon pivotante sur le support de soutien (20) et comportant deux sections de rail de guidage (611) qui sont disposées pour être inclinées, les deux coulisseaux (62) étant disposés dans le support de soutien (20), chacun des coulisseaux (62) comportant un canal de guidage (621) destiné à être engagé avec une section de rail de guidage correspondante (611) et comportant une articulation destinée à être connectée avec une extrémité de l'élément de traction (70) ; et dans lequel :
les deux coulisseaux (62) sont rapprochés l'un de l'autre en étant guidés par les deux sections de rail de guidage (611) lorsque la section de tirage (61) est tirée de manière à réaliser une inter-liaison avec l'élément de traction (70) afin d'entraîner l'extrémité d'application de force (51).

10. Mécanisme de commutation de support (100) pour le dispositif de soutien et de transport selon l'une quelconque des revendications 2 à 9, dans lequel :
l'élément de verrouillage (40) comprend en outre une section d'extension (43) et une section de blocage (44), la section d'extension (43) étant étendue au niveau d'une extrémité de la section d'engagement (42) à distance de la section d'actionnement (41), la section d'extension (43) et la section d'actionnement (41) étant étendues dans des directions opposées, et la section de blocage (44) étant formée au niveau d'une extrémité de la section d'extension (43) à distance de la section d'engagement (42) et selon une forme de crochet ;
l'organe de retenue rotatif (21) est muni d'une ouverture (213) sur une paroi latérale (212) et l'organe de retenue rotatif (21) comporte un bras élastique (214) qui est étendu depuis la paroi latérale (212) dans l'ouverture (213) et qui comporte, au niveau de son extrémité de queue, une section convexe (215) qui fait saillie latéralement depuis la paroi latérale (212) ; et
lorsque l'élément de verrouillage (40) est engagé et verrouillé par une section parmi la section de positionnement en mode siège (11) et la section de positionnement en mode nacelle (12), l'ouverture (213) est alignée avec la position de la section d'extension (43) et la section convexe (215) est soumise à une pression de telle sorte que le bras élastique (214) soit incliné par rapport à l'ouverture (213) en direction de la section d'extension (43) et bloque la section de blocage (44) afin de limiter le détachement de l'élément de verrouillage (40) vis-à-vis du support de soutien (20).

11. Mécanisme de commutation de support (100) pour le dispositif de soutien et de transport selon l'une quelconque des revendications précédentes, dans lequel chacun des organes de retenue et de fixation (10) comporte une première surface latérale (13) et chacun des organes de retenue rotatifs (21) comporte une seconde surface latérale (216), la première surface latérale (13) étant opposée à la seconde surface latérale (216) lorsque chacun des organes de retenue rotatifs (21) est disposé de façon pivotante sur son organe de retenue et de fixation correspondant (10),
dans lequel, parmi la première surface latérale (13) et la seconde surface latérale (216), l'une comporte une section de limitation convexe (14) et l'autre comporte une section de gorge concave (217) qui correspond à la section de limitation convexe (14), la section de gorge concave (217) étant en forme d'arc et présentant une longueur d'arc prédéterminée, dans lequel la section de limitation convexe (14) chemine le long de la longueur d'arc prédéterminée en tant que course de déplacement dans la section de gorge concave (217) et limite ainsi un angle de rotation potentielle de l'organe de retenue rotatif (21).

12. Mécanisme de commutation de support (100) pour le dispositif de soutien et de transport selon la revendication 11, dans lequel l'angle est dans la plage de 30 degrés à 45 degrés.

13. Mécanisme de commutation de support (100) pour le dispositif de soutien et de transport selon l'une quelconque des revendications précédentes, dans lequel le support de soutien (20) est muni d'une armature en forme d'arceau (22), et/ou les organes de retenue rotatifs (21) sur les côtés opposés du support de soutien (20) sont connectés à un accessoire (23) au niveau de la position de siège (P1), dans lequel l'accessoire (23) est un plateau-assiette pour le repas ou une barre de maintien.

14. Siège, **caractérisé en ce qu'**il comprend le mécanisme de commutation de support (100) selon l'une quelconque des revendications 1 à 13.

15. Dispositif de soutien et de transport, **caractérisé en ce que** le dispositif de soutien et de transport est muni du siège selon la revendication 14 ou est muni du mécanisme de commutation de support (100) selon la revendication 1.
